# EUROPEAN PATENT SPECIFICATION

(11) **EP 3 351 870 B1**
(45) Date of publication and mention of the grant of the patent: **28.08.2019**
(21) Application number: 18152839.9
(22) Date of filing: 22.01.2018
(51) Int. Cl.: F25B 1/10, F25B 30/02, F25B 40/06, F25B 49/02, F25B 40/00

(54) **REFRIGERANT CIRCUIT SYSTEM AND CONTROL METHOD**
KÄLTEMITTELKREISLAUFSYSTEM UND STEUERUNGSVERFAHREN
SYSTÈME ET PROCÉDÉ DE COMMANDE DE CIRCUIT DE FLUIDE FRIGORIGÈNE

(30) Priority: 24.01.2017 JP 2017010249
(43) Date of publication of application: 25.07.2018
(73) Proprietor: MITSUBISHI HEAVY INDUSTRIES THERMAL SYSTEMS, LTD., Tokyo 108-8215 (JP); Chubu Electric Power Co., Inc., Nagoya-shi Aichi-ken 461-8680 (JP)
(72) Inventor: MAENO, Masashi, TOKYO, 108-8215 (JP); NAKAYAMA, Hiroshi, NAGOYA, AICHI, 461-8680 (JP); WATANABE, Choyu, NAGOYA, AICHI, 461-8680 (JP)
(74) Representative: Cabinet Beau de Loménie

(56) References cited:
- EP-A1- 1 043 550
- EP-A1- 2 489 774
- EP-A1- 3 054 238
- EP-A2- 0 915 306
- EP-A2- 2 631 578
- WO-A2-2010/117973

## Description

### BACKGROUND OF THE INVENTION

### Field of the Invention

The present invention relates to a refrigerant circuit system and a control method.

### Description of Related Art

If a high-temperature heat pump is constituted using a refrigerant circuit component which is designed for a refrigerant such as R410A used in air conditioners, a refrigerant temperature on a use-side can be raised only up to around 60°C due to a design pressure. In order to raise the refrigerant temperature on a use-side to a high temperature equal to or higher than 80°C while keeping the design pressure equal to a pressure of a current air conditioner in the high-temperature heat pump, use of a low pressure refrigerant such as R134a (HFC type) or R1234yf (HFO type) has been considered.

In addition, in the high-temperature heat pump which requires a high temperature equal to or higher than 80°C as a refrigerant temperature on a use side, a refrigerant compression ratio is large. For this reason, a configuration with a multi-stage compressor and a gas injection circuit may be provided to improve a coefficient of performance (COP) in a refrigerant circuit of the high-temperature heat pump.

In Patent Document 1, a configuration is disclosed in which a suction and heating heat exchanger is provided between an evaporator and a compressor of a refrigerant circuit constituting a refrigeration cycle and heat exchange is performed between a refrigerant flowing to an expansion valve from a radiator and a refrigerant flowing to the compressor from the evaporator. EP 2 489 774 A1 and EP 1 043 550 A1 disclose a refrigerant circuit system according to the preamble of claim 1, and a control method according to the preamble of claim 11.

### [Patent Documents]

[Patent Document 1] Japanese Unexamined Patent Application, First Publication No. 2011-242056

### SUMMARY OF THE INVENTION

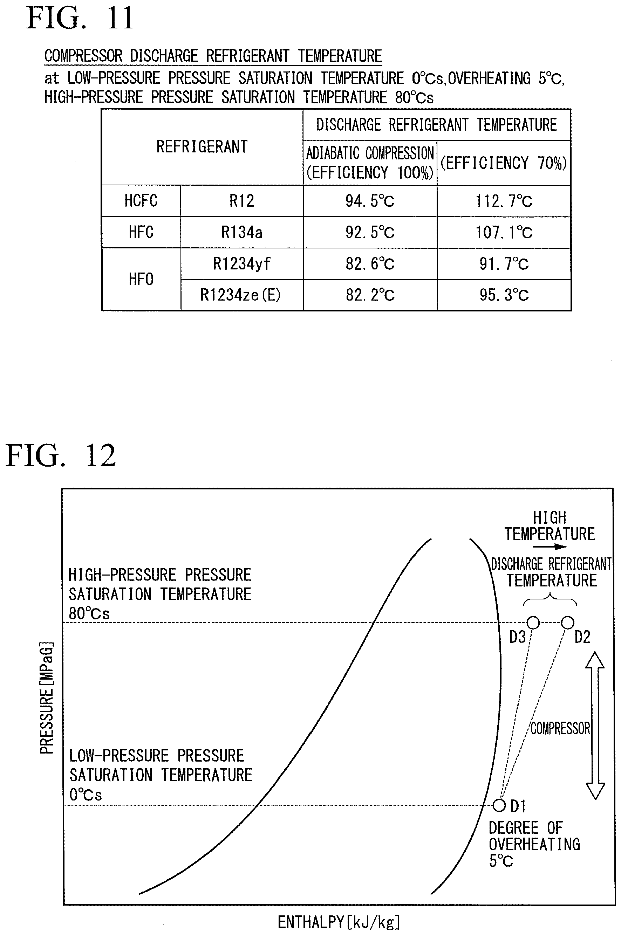

However, there are some low-pressure refrigerants of which the compressor discharge refrigerant temperature does not sufficiently rise. FIG. 11 shows a compressor discharge temperature for each refrigerant when a refrigerant is adiabatically compressed with efficiency of 100% or 70%. Referring to FIG. 11 particularly, the HFO type refrigerant has a low compressor discharge temperature. In addition, FIG. 12 shows a state change of a refrigerant at that time. In FIG. 12, it is assumed that a state of a refrigerant at a compressor discharge side when adiabatic compression is performed using, for example, an HCFC type refrigerant is a state indicated by a point D2. When an HFO type refrigerant is used, even if the same adiabatic compression is performed, a state of the refrigerant at the compressor discharge side may be a state indicated by a point D3. When a low-pressure refrigerant is used in the high-temperature heat pump in this manner, even if a pressure is raised using a plurality of compressors with a multi-stage configuration, a discharge refrigerant temperature of a high-stage-side compressor may not reach a desired high temperature.

An object of the present invention is to provide a refrigerant circuit system and a control method which can solve the problems described above.

According to the present invention as defined by appended independent claims 1 and 7, there is provided a refrigerant circuit system inter alia including a compressor configured to compress a refrigerant, a use-side heat exchanger configured to condense the refrigerant compressed by the compressor, an expansion valve configured to depressurize the refrigerant, a heat-source-side heat exchanger configured to evaporate the refrigerant depressurized by the expansion valve, an overheating heat exchanger configured to perform heat exchange between the refrigerant flowing into the expansion valve and the refrigerant flowing into the compressor from the heat-source heat exchanger, a bypass circuit configured to bypass a flow of the refrigerant passing through the overheating heat exchanger, and a flow rate adjustment unit configured to adjust a flow rate of the refrigerant passing through the overheating heat exchanger. The refrigerant circuit system according to the invention furthermore comprises the remaining features of one of appended independent claims 1 or 7, representing two refrigerant circuit systems with alternative control systems.

A plurality of the compressors may be connected in series, the refrigerant circuit system may further comprise a receiver configured to store some of the refrigerant, and the expansion valve may be configured to depressurize the refrigerant flowing out from the receiver.

The refrigerant circuit system may further include a gas injection circuit configured to branch some of the refrigerant flowing out from the receiver and to supply the branched refrigerant to a suction side of a predetermined compressor among the plurality of compressors.

The bypass circuit may be provided as a path which bypasses the overheating heat exchanger among refrigerant paths passing through the overheating heat exchanger from the use-side heat exchanger and leading to the expansion valve.

The bypass circuit may be provided as a path which bypasses the overheating heat exchanger among refrigerant paths passing through the overheating heat exchanger from the heat-source-side heat exchanger and leading to the compressor.

The refrigerant circuit system further includes a control device configured to control the flow rate adjustment unit, and the control device controls the flow rate adjustment unit so that a flow rate of the refrigerant passing through the overheating heat exchanger decreases if a temperature related to the compressor is equal to or higher than a predetermined non-overheating switching control value.

The control device may control the flow rate adjustment unit so that a flow rate of the refrigerant passing through the overheating heat exchanger increases if a temperature related to the compressor is lower than a predetermined overheating switching control value.

The control device may control the flow rate adjustment unit so that a flow rate of the refrigerant passing through the overheating heat exchanger decreases if a temperature at an outlet side of the overheating heat exchanger, instead of a temperature related to the compressor, is equal to or higher than a predetermined threshold value.

The control device may control the flow rate adjustment unit so that a flow rate of the refrigerant passing through the overheating heat exchanger increases if a temperature at the outlet side of the overheating heat exchanger, instead of a temperature related to the compressor, is lower than a predetermined threshold value.

The control device may control the flow rate adjustment unit so that a degree of overheating at a suction side of the compressor is within a predetermined range.

The control device decreases the number of rotations of the compressor if a temperature related to the compressor is equal to or higher than a first predetermined limit value higher than the non-overheating switching control value. The control device may stop the compressor if a temperature related to the compressor is equal to or higher than a second predetermined limit value higher than the first limit value.

According to the present invention, there is also provided a control method for controlling a refrigerant circuit system including a compressor configured to compress a refrigerant, a use-side heat exchanger configured to condense the refrigerant compressed by the compressor, an expansion valve configured to depressurize the refrigerant, a heat-source-side heat exchanger configured to evaporate the refrigerant, an overheating heat exchanger configured to perform heat exchange between the refrigerant flowing into the expansion valve and the refrigerant flowing into the compressor from the heat-source-side heat exchanger, a bypass circuit configured to bypass a flow of the refrigerant passing through the overheating heat exchanger, and a flow rate adjustment unit configured to adjust a flow rate of the refrigerant passing through the overheating heat exchanger, and the control method comprises: controlling the flow rate adjustment unit so that a flow rate of the refrigerant passing through the overheating heat exchanger decreases if a temperature related to the compressor is equal to or higher than a predetermined non-overheating switching control value; and decreasing the number of rotations of the compressor if a temperature related to the compressor is equal to or higher than a first predetermined limit value higher than the non-overheating switching control value.

Another aspect of the disclosure, which is not claimed, provides a control method including performing, in a refrigerant circuit constituting a heating cycle, heat exchange between a refrigerant flowing into an expansion valve included in the refrigerant circuit and a refrigerant flowing out from an evaporator included in the refrigerant circuit, and heating the refrigerant flowing into a compressor included in the refrigerant circuit.

In the control method described above, a flow rate of the refrigerant on which the heat exchange is performed may be adjusted on the basis of a temperature at the discharge side of the compressor.

According to the present invention, it is possible to increase a temperature at a discharge side of a compressor and set a use-side set temperature to a desired high temperature by increasing a suction temperature of the compressor in a heating cycle.

### BRIEF DESCRIPTION OF THE DRAWINGS

FIG. 1 is a first diagram showing a refrigerant circuit system according to a first embodiment of the present invention.
FIG. 2 is a second diagram showing a refrigerant circuit system according to the first embodiment of the present invention.
FIG. 3 is a P-h diagram of the refrigerant circuit system according to the first embodiment of the present invention.
FIG. 4 is a diagram showing a control method by a control device according to the first embodiment of the present invention.
FIG. 5 is a flowchart of the control device according to the first embodiment of the present invention.
FIG. 6 is a third diagram showing the refrigerant circuit system according to the first embodiment of the present invention.
FIG. 7 is a diagram showing a refrigerant circuit system according to a second embodiment of the present invention.
FIG. 8 is a P-h diagram of the refrigerant circuit system according to the second embodiment of the present invention.
FIG. 9 is a diagram showing a refrigerant circuit system according to a third embodiment of the present invention.
FIG. 10 is a P-h diagram of the refrigerant circuit system according to the third embodiment of the present invention.
FIG. 11 is a diagram showing an example of a compressor discharge refrigerant temperature.
FIG. 12 is a diagram showing the compressor discharge refrigerant temperature.

### DETAILED DESCRIPTION OF THE INVENTION

### <First embodiment>

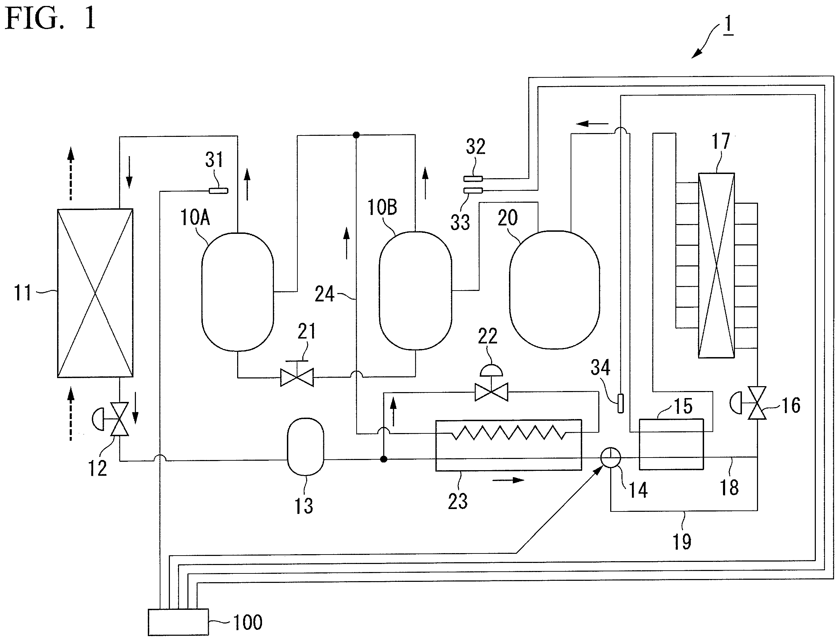

Hereinafter, a refrigerant circuit system according to a first embodiment of the present invention will be described with reference to FIGS. 1 to 6.

FIG. 1 is a first diagram showing a refrigerant circuit system according to the first embodiment of the present invention.

A refrigerant circuit system 1 is, for example, a refrigerant circuit of a high-temperature heat pump used for a water heater. The refrigerant circuit system 1 raises a temperature of supply water supplied from the outside to a predetermined use-side set temperature (a set temperature of supply water required by a user, for example, 80°C or the like), and supplies this hot water to the user. In the refrigerant circuit system 1 of the present embodiment, a low-pressure refrigerant of an HFO type such as R1234yf is used as a refrigerant. The low-pressure refrigerant is a refrigerant having a characteristic such that a high-low differential pressure during an operation is low. The refrigerant such as R1234yf is a low global warming potential (GWP) refrigerant with little influence on the environment, and has been under examination as a substitute for a refrigerant which has been widely used.

As shown in FIG. 1, the refrigerant circuit system 1 is configured to include a high-stage-side compressor 10A, a low-stage-side compressor 10B, a use-side heat exchanger (a condenser) 11, a first expansion valve 12, a receiver 13, a switching valve 14, an overheating heat exchanger 15, a second expansion valve 16, a heat-source-side heat exchanger (an evaporator) 17, an accumulator 20, a main piping 18 connecting these, a bypass piping 19 which bypasses a passage of a refrigerant passing through the overheating heat exchanger 15, a two-way valve 21 which connects the high-stage-side compressor 10A and the low-stage-side compressor 10B, a third expansion valve 22, an intermediate heat exchanger 23, an injection piping 24, and a control device 100. The third expansion valve 22, the intermediate heat exchange 23, and the injection piping 24 constitute a gas injection circuit.

A specific configuration of the refrigerant circuit system 1 shown in FIG. 1 schematically shows a basic configuration of the refrigerant circuit system 1, and may further include other constituent elements.

The high-stage-side compressor 10A and the low-stage-side compressor 10B compress a refrigerant and discharge the high-pressure refrigerant. The low-stage-side compressor 10B and the high-stage-side compressor 10A are connected in series. A suction side of the low-stage-side compressor 10B is connected to the accumulator 20. In addition, a discharge side of the low-stage-side compressor 10B is connected to a suction side of the high-stage-side compressor 10A. The low-stage-side compressor 10B sucks a gas refrigerant separated by the accumulator 20, compresses the gas refrigerant, and discharges the intermediate-pressure refrigerant to the high-stage-side compressor 10A side. In addition, on a downstream side of the receiver 13, the injection piping 24 which branches some of a refrigerant flowing through the main piping 18 connected to the second expansion valve 16 and the heat-source-side heat exchanger 17 and supplies the branched flow to the suction side of the high-stage-side compressor 10A is provided. The refrigerant branched to the injection piping 24 is depressurized by the third expansion valve 22, exchanges heat with the refrigerant flowing through the main piping 18 by the intermediate heat exchanger 23, and then is supplied to a suction side of the high-stage-side compressor 10A. The high-stage-side compressor 10A sucks and compresses the refrigerant. The compressed refrigerant is supplied to the use-side heat exchanger 11. The use-side heat exchanger 11 functions as a condenser. The refrigerant supplied to the use-side heat exchanger 11 exchanges heat with supply water used by a user or the like to radiate heat, and is condensed into a liquid. On the other hand, supply water used by a user, which is supplied to the use-side heat exchanger 11, absorbs heat from the refrigerant, has a temperature raised to a predetermined set temperature (use-side set temperature), and is supplied to a user. In the figures, a dotted arrow indicates a flow direction of supply water and a solid arrow indicates a flow direction of the refrigerant.

The refrigerant after the heat exchange is depressurized and expanded by the first expansion valve 12, and supplied to the receiver 13. The receiver 13 is a pressure vessel for temporarily storing some of the supplied refrigerant. Two phases of the refrigerant such as gas and liquid are mixed and stored in the receiver 13. Some of the refrigerant flowing out from the receiver 13 is branched to the injection piping 24 side for gas injection as described above. The remaining refrigerant is cooled by the refrigerant for gas injection branched by the intermediate heat exchanger 23, flows through the main piping 18 via the switching valve 14 and the overheating heat exchanger 15, is further depressurized by the second expansion valve, and is supplied to the heat-source-side heat exchanger 17.

The heat-source-side heat exchanger 17 functions as an evaporator. The refrigerant supplied to the heat-source-side heat exchanger 17 absorbs heat from a heat source such as the outside air, has a raised temperature, and is evaporated. The refrigerant evaporated by an evaporator is supplied to the accumulator 20 via the overheating heat exchanger 15. The refrigerant is separated into gas and liquid by the accumulator 20 and only the gas refrigerant is sucked into the low-stage-side compressor 10B. The refrigerant is compressed by the low-stage-side compressor 10B and the high-stage-side compressor 10A and goes around the above path again.

Here, the switching valve 14 is a valve which switches a refrigerant path leading to the second expansion valve 16 between the main piping 18 and the bypass piping 19. In the case of FIG. 1, the switching valve 14 is controlled by the control device 100 so that the refrigerant flows to the main piping 18 side. The overheating heat exchanger 15 performs heat exchange between the refrigerant flowing to the second expansion valve from the receiver 13 and the refrigerant flowing to the accumulator 20 from the heat-source-side heat exchanger 17. In the overheating heat exchanger 15, the refrigerant flowing to the accumulator 20 from the heat-source-side heat exchanger 17 absorbs heat from the refrigerant flowing to the second expansion valve from the receiver 13. That is, a temperature of the refrigerant flowing to the accumulator 20 (the suction side of the low-stage-side compressor 10B) is raised. When the low-pressure refrigerant of the HFO type such as R1234yf is used, if a use-side set temperature is set to a high temperature (for example, 80°C), there are some cases in which it is difficult to raise a temperature of a refrigerant at a discharge side of a compressor to a required temperature (for example, 82°C) even if the refrigerant is compressed by a plurality of compressors (10A and 10B). Accordingly, the overheating heat exchanger 15 raises the temperature of the refrigerant sucked by the low-stage-side compressor 10B, thereby raising the temperature of the refrigerant at the discharge side of the high-stage-side compressor 10A to a desired high temperature (for example, 82°C). In addition, the switching valve 14 is provided in the refrigerant circuit system 1 of the present embodiment to prevent the refrigerant temperature at the suction side of the low-stage-side compressor 10B from being excessively raised by the overheating heat exchanger 15.

The first expansion valve 12 and the second expansion valve 16 are flow rate control valves, and each opening is adjusted by the control device 100. For example, an opening of the first expansion valve 12 is controlled so that a temperature at the outlet side of the use-side heat exchanger 11 is a predetermined target temperature in accordance with a use-side set temperature. In addition, for example, an opening of the second expansion valve 16 is controlled so that a temperature at the outlet side of the heat-source-side heat exchanger 17 has a predetermined degree of overheating.

In the refrigerant circuit system 1, a plurality of sensors for measuring a temperature and a pressure of the refrigerant are provided. For example, a temperature sensor 31 is provided on an outlet side of the high-stage-side compressor 10A, a temperature sensor 32 and a pressure sensor 33 are provided on the suction side of the low-stage-side compressor 10B, and a temperature sensor 34 is provided on an outlet side of the accumulator 20 side of the overheating heat exchanger 15. The control device 100 acquires a temperature at the outlet side of the high-stage-side compressor 10A measured by the temperature sensor 31, a temperature at the suction side of the low-stage-side compressor 10B measured by the temperature sensor 32, a pressure at the suction side of the low-stage-side compressor 10B measured by the pressure sensor 33, and a temperature at the outlet side of the accumulator 20 side of the overheating heat exchanger 15 measured by the temperature sensor 34.

The control device 100 performs control of the refrigerant circuit system 1. For example, the control device 100 performs control of the number of rotations of the high-stage-side compressor 10A and the low-stage-side compressor 10B, switching control of the switching valve 14, and the like on the basis of a temperature at the outlet side of the high-stage-side compressor 10A measured by the temperature sensor 31. In addition, for example, the control device 100 performs the switching control of the switching valve 14 on the basis of a degree of overheating at the suction side of the low-stage-side compressor 10B based on a temperature measured by the temperature sensor 32 and a pressure measured by the pressure sensor 33. Moreover, the control device 100 may also perform the switching control of the switching valve 14 on the basis of a temperature at the outlet side of the accumulator 20 side measured by the temperature sensor 34.

FIG. 1 shows a refrigerant circuit when the control device 100 switches the switching valve 14 so that the refrigerant path is the main piping 18 side. When the refrigerant passes through the overheating heat exchanger 15 instead of the bypass piping 19, there is a heat transfer from the refrigerant flowing to an upstream side of the second expansion valve 16 to the refrigerant flowing to the low-stage-side compressor 10B from the heat-source-side heat exchanger 17. As a result, the temperature of the refrigerant evaporated by the heat-source-side heat exchanger 17 is raised, and the refrigerant at the higher temperature is supplied to the low-stage-side compressor 10B as compared with a case in which the refrigerant does not pass through the overheating heat exchange 15. Accordingly, even when a low-pressure refrigerant such as R1234yf is used, a temperature at the discharge side of the compressor 10A can reach a desired high temperature. Hereinafter, a refrigerant circuit of the case exemplified in FIG. 1 in which the refrigerant passes through the overheating heat exchanger 15 may be referred to as an overheating circuit.

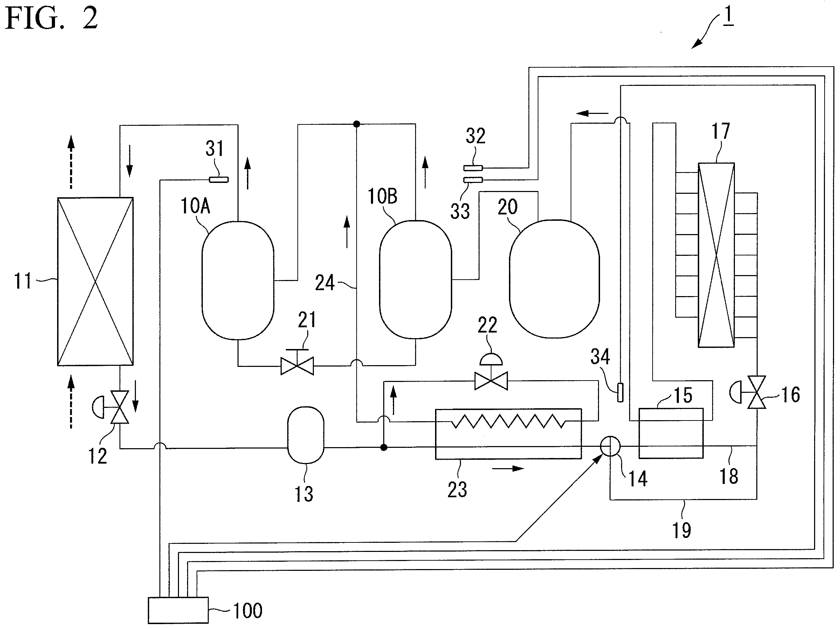

FIG. 2 is a second diagram showing a refrigerant circuit system according to the first embodiment of the present invention.

FIG. 2 shows a refrigerant circuit when the control device 100 switches a path of a refrigerant to the bypass piping 19 side. When the refrigerant passes through the bypass piping 19 (when the refrigerant does not pass through the overheating heat exchanger 15), there is no heat exchange between the refrigerant flowing upstream of the second expansion valve 16 and the refrigerant flowing to the low-stage-side compressor 10B from the heat-source-side heat exchanger 17. When a temperature at the discharge side of the high-stage-side compressor 10A is excessively raised due to an increase in temperature at the suction side of the low-stage-side compressor 10B, the control device 100 switches the switching valve 14 as shown in FIG. 2, and performs control so that the refrigerant flows through the bypass piping 19. As a result, it is possible to suppress an excessive increase in temperature at the discharge side of the high-stage-side compressor 10A due to an increase in a temperature at the suction side of the low-stage-side compressor 10B and to maintain the temperature at the discharge side of the compressor 10A at a desired high temperature. Hereinafter, a refrigerant circuit of the case exemplified in FIG. 2 in which the refrigerant passes through the bypass piping 19 may be referred to as a non-overheating circuit.

As described above, in the refrigerant circuit system 1 constituting the heating cycle of the present embodiment, a heat exchanger (the overheating heat exchanger 15) which performs heat exchange between the refrigerant flowing out from a condenser and the refrigerant flowing out from an evaporator is provided, and the refrigerant flowing into the compressor (the low-stage-side compressor 10B) is heated by this heat exchanger. In addition, the refrigerant circuit system 1 includes a flow rate adjustment unit (the switching valve 14) which adjusts a flow rate of the refrigerant flowing through the heat exchanger so that the refrigerant is not excessively heated. For example, the control device 100 switches a flow rate of the refrigerant flowing through the heat exchanger between 0% and 100% by performing switching control of the switching valve 14.

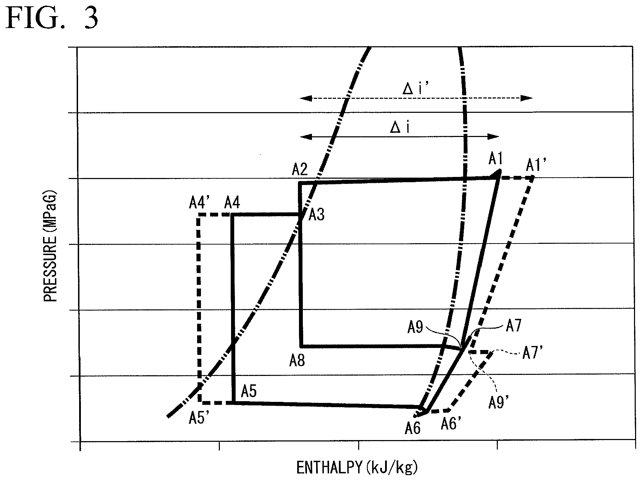

FIG. 3 is a P-h diagram of the refrigerant circuit system according to the first embodiment of the present invention.

FIG. 3 is a diagram of a relationship between a pressure and an enthalpy representing a refrigeration cycle when the refrigerant circuit system 1 is operated. The signs in the P-h diagram of FIG. 3 indicate the following states. That is, A1 and A1' indicate states of the refrigerant discharged by the high-stage-side compressor 10A, A2 indicates a state of the refrigerant at the outlet side of the use-side heat exchanger 11, A3 indicates a state of the refrigerant at the outlet side of the first expansion valve 12, A4 and A4' indicate states of the refrigerant at the inlet side of the second expansion valve 16, A5 and A5' indicate states of the refrigerant at the outlet side of the second expansion valve 16, A6 and A6' indicate states of the refrigerant at the suction side of the low-stage-side compressor 10B, A7 and A7' indicate states of the refrigerant discharged by the low-stage-side compressor 10B, A8 indicates a state of the refrigerant at the outlet side of the third expansion valve 22, and A9 and A9' indicate states of the refrigerant at the suction side of the high-stage-side compressor 10A.

Among these, a dotted line graph indicated using A1', A2, A3, A4', A5', A6', A7', A8, and A9' is a P-h diagram when the control device 100 switches the switching valve 14 to the main piping 18 side (overheating circuit) so that heat exchange is performed on the refrigerant. On the other hand, a solid line graph indicated using A1, A2, A3, A4, A5, A6, A7, A8, and A9 is a P-h diagram when the control device 100 switches the switching valve 14 to the bypass piping 19 side (non-overheating circuit) so that heat exchange is not performed on the refrigerant.

The high-temperature and high-pressure refrigerant (states A1 and A1') discharged from the high-stage-side compressor 10A radiates heat in the use-side heat exchanger 11, is condensed into a liquid, and becomes a high-pressure liquid refrigerant (state A2). The high-pressure liquid refrigerant is depressurized by the first expansion valve 12, becomes an expanded refrigerant (state A3), and flows into the receiver 13. Among the refrigerant flowing out from the receiver 13, the refrigerant flowing through the main piping 18 is cooled by the intermediate heat exchanger 23 (state A4), and leads to the second expansion valve 16. In addition, the refrigerant flowing through the main piping 18 is further cooled by heat exchange at the overheating heat exchanger 15 (state A4'), and leads to the second expansion valve 16 in an overheating circuit. The refrigerant is then further depressurized by the second expansion valve 16 (states A5, A5'), flows into the heat-source-side heat exchanger 17 to evaporate, and becomes a gas refrigerant (state A6). Moreover, in the case of the overheating circuit, the gas refrigerant is heated by the heat exchange at the overheating heat exchanger 15 (state A6'). The gas refrigerant has a pressure raised to a predetermined intermediate pressure by the low-stage-side compressor 10B (states A7 and A7'), and is supplied to the suction side of the high-stage-side compressor 10A. On the other hand, the refrigerant branched to a gas injection circuit is depressurized to a predetermined intermediate pressure by the third expansion valve 22 (state A8), absorbs heat via the intermediate heat exchanger 23, and is supplied to the suction side of the high-stage-side compressor 10A via the injection piping 24. The refrigerant supplied via the injection piping 24 and the refrigerant compressed by the low-stage-side compressor 10B are mixed and the intermediate-pressure refrigerant whose temperature is lowered (state A9 and A9') is supplied to the high-stage-side compressor 10A. The high-stage-side compressor 10A compresses the intermediate-pressure refrigerant and discharges the high-temperature and high-pressure refrigerant (state A1 and A1'). Thereafter, the same cycle is repeated.

As described above, in the overheating circuit, the refrigerant flowing into the low-stage-side compressor 10B is heated at the overheating heat exchanger 15 by the refrigerant flowing into the second expansion valve 16 (state A6'). With this influence, enthalpies at the suction side (state A9') and the discharge side (state A1') of the high-stage-side compressor 10A increase. On the other hand, the refrigerant flowing into the second expansion valve 16 is cooled by the refrigerant flowing into the suction side of the low-stage-side compressor 10B from the heat-source-side heat exchanger 17 by the heat exchange at the overheating heat exchanger 15 (state A4' and A5').

Δi in FIG. 3 is an enthalpy difference between an inlet (state A1) and an outlet (state A2) of the refrigerant passing through the use-side heat exchanger 11 when the switching valve 14 is switched to the non-overheating circuit. On the other hand, Δi' in FIG. 3 is an enthalpy difference between the inlet (state A1') and the outlet (state A2) of the refrigerant passing through the use-side heat exchanger 11 when the switching valve 14 is switched to the overheating circuit.

As described above, according to the overheating circuit of the present embodiment, since a temperature at the discharge side of the high-stage-side compressor 10A can be set to a high temperature, even if a low-pressure refrigerant is used, it is possible to obtain a desired use-side set temperature due to the enthalpy difference Δi'.

Next, control of the switching valve 14 by the control device 100 will be described by taking configurations of FIGS. 1 and 2 as examples.

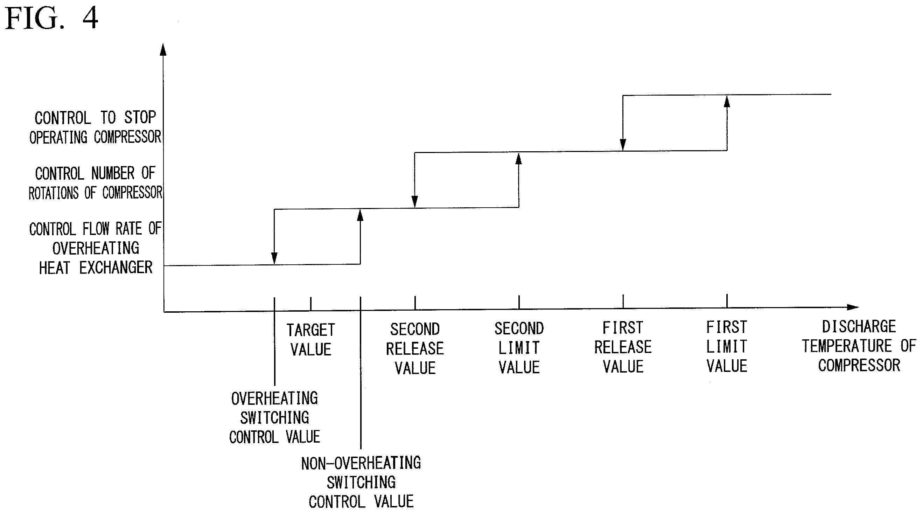

FIG. 4 is a diagram showing a control method by a control device according to the first embodiment of the present invention. FIG. 4 is a diagram showing operations of the high-stage-side compressor 10A and the low-stage-side compressor 10B performed by the control device 100 on the basis of a temperature at the discharge side of the high-stage-side compressor 10A measured by the temperature sensor 31 or switching control of the switching valve 14.

In FIG. 4, a horizontal axis represents a temperature at the discharge side of the high-stage-side compressor 10A and a vertical axis represents control by the control device 100.

In FIG. 4, a target value is a target value of a temperature at the discharge side of the high-stage-side compressor 10A. The control device 100 controls the number of rotations of the high-stage-side compressor 10A and the low-stage-side compressor 10B so that a temperature at the discharge side of the high-stage-side compressor 10A becomes a target value by switching the switching valve 14 to either one. An overheating switching control value is a temperature at which the control device 100 switches the switching valve 14 so that the refrigerant circuit system 1 constitutes the overheating circuit. The control device 100 performs control to switch the switching valve 14 so that the refrigerant passes through the overheating heat exchanger 15 if a temperature at the discharge side of the high-stage-side compressor 10A is lowered to be lower than the overheating switching control value which is lower than the target value.

Anon-overheating switching control value is a temperature at which the control device 100 switches the switching valve 14 so that the refrigerant circuit system 1 constitutes the non-overheating circuit. The control device 100 performs control to switch the switching valve 14 so that the refrigerant passes through the bypass piping 19 instead of the overheating heat exchanger 15 if a temperature at the discharge side of the high-stage-side compressor 10A is equal to or higher than the overheating switching control value exceeding the target value.

A second limit value is a temperature at which the control device 100 starts limiting the number of rotations of the high-stage-side compressor 10A and the low-stage-side compressor 10B. If a temperature at the discharge side of the high-stage-side compressor 10A is equal to or higher than the second limit value, the control device 100 limits the number of rotations of the high-stage-side compressor 10A and the low-stage-side compressor 10B, and suppresses an increase in temperature at the discharge side. The target value is a temperature lower than the second limit value.

A second release value is a temperature at which a limit on the number of rotations of the high-stage-side compressor 10A and the low-stage-side compressor 10B by the control device 100 is released. If a temperature at the discharge side of the high-stage-side compressor 10A is lower than the second release value, the control device 100 stops limiting the number of rotations of the high-stage-side compressor 10A and the low-stage-side compressor 10B, and performs normal control on the number of rotations.

A first limit value is a temperature at which the control device 100 stops operating the high-stage-side compressor 10A and the low-stage-side compressor 10B. If a temperature at the discharge side of the high-stage-side compressor 10A is equal to or higher than the first limit value, the control device 100 stops operating the high-stage-side compressor 10A and the low-stage-side compressor 10B. A first release value is a temperature at which a stop limit on operating the high-stage-side compressor 10A and the low-stage-side compressor 10B by the control device 100 is released. If a temperature at the discharge side of the high-stage-side compressor 10A is lower than the first release value, the control device 100 restarts operation of the high-stage-side compressor 10A and the low-stage-side compressor 10B.

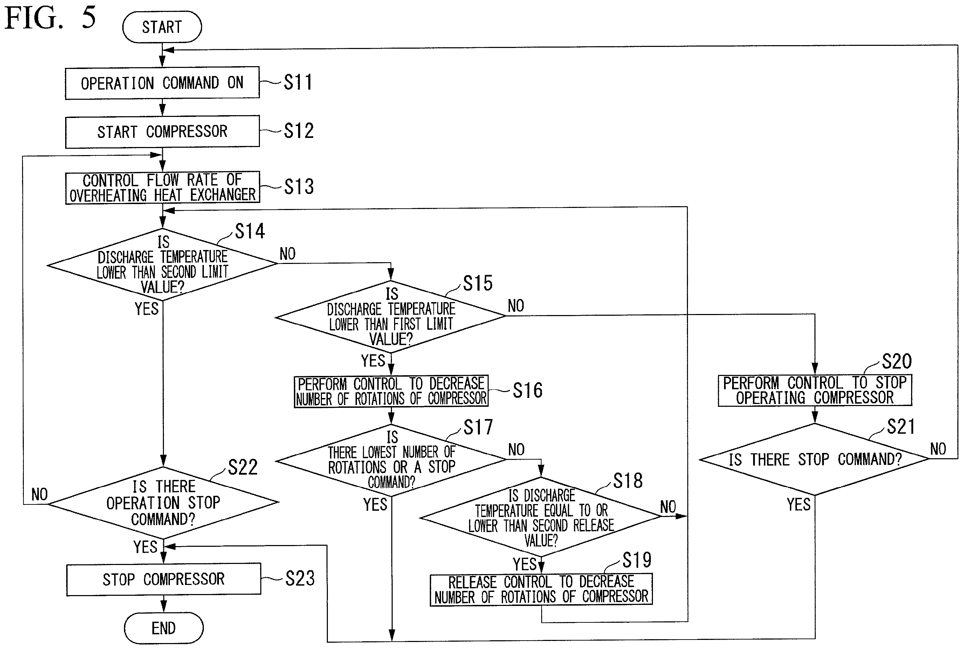

FIG. 5 is a flowchart of the control device according to the first embodiment of the present invention.

As a premise, the control device 100 acquires information on a temperature measured by the temperature sensor 31 at predetermined time intervals, and records the acquired information on the temperature in a storage unit (not shown) embedded therein. In addition, R1234yf is used as the refrigerant.

First, an operator or the like inputs an operation command ON signal to the control device 100. The input of the operation command ON signal is received by the control device 100 (step S11). Next, the control device 100 activates the high-stage-side compressor 10A and the low-stage-side compressor 10B (step S12). The control device 100 then controls a flow rate of the refrigerant passing through the overheating heat exchanger 15 by controlling the switching valve 14 (step S13). For example, since a temperature at the discharge side of the high-stage-side compressor 10A does not reach the target value at the time of activation, the control device 100 sets the switching valve 14 so that the refrigerant passes through the overheating heat exchanger 15. The control device 100 then determines whether a temperature at the discharge side of the high-stage-side compressor 10A is lower than the second limit value (step S14).

If the discharge side temperature is equal to or higher than the second limit value (No in step S14), the control device 100 determines whether the temperature at the discharge side of the high-stage-side compressor 10A is lower than the first limit value (step S15). If the discharge side temperature is lower than the first limit value (Yes in step S15), the control device 100 performs limitation to decrease the number of rotations of the high-stage-side compressor 10A and the low-stage-side compressor 10B (step S16). For example, the number of rotations of the high-stage-side compressor 10A and the low-stage-side compressor 10B at the time of performing control to lower the number of rotations is set in advance, and the control device 100 decreases the number of rotations of each compressor to the number of rotations set in advance for each compressor. A discharge side temperature which is equal to or higher than the second limit value is lowered by decreasing the number of rotations.

Next, the control device 100 determines whether the number of rotations of the high-stage-side compressor 10A and the low-stage-side compressor 10B is the lowest number of rotations or whether a stop command is input (step S17). When either condition is satisfied (Yes in step S17), the control device 100 stops the high-stage-side compressor 10A and the low-stage-side compressor 10B (step S23).

In step S15, when a temperature at the discharge side of the high-stage-side compressor 10A is equal to or higher than the first limit value (No in step S15), the control device 100 stops the high-stage-side compressor 10A and the low-stage-side compressor 10B (step S20). Next, the control device 100 determines whether a command to stop the compressors is input (step S21). The command to stop the compressors is, for example, a signal indicating that a failure has occurred, for example, when at least one of the high-stage-side compressor 10A and the low-stage-side compressor 10B fails. When the command to stop the compressors is input (Yes in step S21), the control device 100 stops the high-stage-side compressor 10A and the low-stage-side compressor 10B (step S23). When the command to stop the compressors is not input (No in step S21), if a temperature at the discharge side of the high-stage-side compressor 10A is lower than the first release value, for example, an operator or the like inputs an operation command ON signal. Alternatively, the control device 100 may automatically generate an operation command ON signal. The control device 100 receives the input of the operation command ON signal and repeats the control from step S11 again.

In step S17, when neither condition is satisfied (No in step S17), the control device 100 repeats the control from step S14. The control device 100 determines whether a temperature at the discharge side of the high-stage-side compressor 10A is equal to or lower than the second release value due to a decrease in the number of rotations of the high-stage-side compressor 10A and the low-stage-side compressor 10B (step S18). If the discharge side temperature is equal to or lower than the second release value (Yes in step S18), the control device 100 releases the control to decrease the number of rotations of the compressors (step S19). The control device 100 returns the control of the number of rotations of the high-stage-side compressor 10A and the low-stage-side compressor 10B to normal control. That is, the control device 100 controls the number of rotations of the high-stage-side compressor 10A and the low-stage-side compressor 10B so that the temperature at the discharge side of the high-stage-side compressor 10A is the target value. The control device 100 then repeats the control from step S14. On the other hand, when the discharge side temperature is not equal to or lower than the second release value (No in step S18), the control device 100 repeats the control from step S14.

In step S14, when the discharge side temperature is lower than the second limit value (Yes in step S14), the control device 100 determines whether an operation stop command is input (step S22). For example, when an operator or the like inputs an operation stop command to the control device 100 (Yes in step S22), the control device 100 stops the compressors (10A and 10B) (step S23). When there is no input of an operation stop command (No in step S22), the control device 100 repeats the control from step S13. That is, if a temperature at the discharge side of the high-stage-side compressor 10A is lower than the overheating switching control value, the control device 100 switches the switching valve 14 so that the refrigerant passes through the overheating heat exchanger 15. In addition, if a temperature at the discharge side of the high-stage-side compressor 10A is equal to or higher than the non-overheating switching control value, the control device 100 performs control to switch the switching valve 14 so that the refrigerant passes through the bypass piping 19.

According to the present embodiment, it is possible to increase a temperature of the refrigerant flowing into the suction side of the compressor (the low-stage-side compressor 10B) by the heat exchanger (the overheating heat exchanger 15) using heat of the refrigerant flowing into the expansion valve (the second expansion valve 16) provided on the upstream side of the evaporator (the heat-source-side heat exchanger 17) in the heating cycle. As a result, a temperature at the discharge side of the compressor (the high-stage-side compressor 10A) can be increased. Therefore, if the refrigerant circuit system 1 of the present embodiment is applied to a high-temperature heat pump, even when an HFO type low-pressure refrigerant such as R1234yf or R1234ze (E) is used as a refrigerant, a temperature at the discharge side of the compressor (the high-stage-side compressor 10A) can be controlled to be a desired high temperature.

Moreover, it is possible to prevent an excessive temperature rise of the refrigerant flowing into the suction side of the compressor (the low-stage-side compressor 10B) and to maintain an appropriate temperature of the refrigerant by adjusting a flow rate of the refrigerant passing through the heat exchanger (the overheating heat exchanger 15). As a result, it is possible to maintain a temperature at the discharge side of the compressor (the high-stage-side compressor 10A) to be a desired target temperature. The present embodiment furthermore comprises all features and method steps of at least one of the appended independent claims.

### <Other embodiments>

Each of the other embodiments discussed in the following falls into the invention if it comprises at least all features and method steps of at least one of the appended independent claims.

In the example described above, a target temperature at the discharge side of the compressor (the high-stage-side compressor 10A) is set as a target value, and the control device 100 switches the switching valve 14 based on whether this target value is an overheating switching control value or a non-overheating switching control value. As another example, the control device 100 may perform switching control of the switching valve 14 on the basis of target values of other temperatures related to the compressor, for example, a temperature under a dome (a temperature under a compressor casing) of the compressor (the high-stage-side compressor 10A and the low-stage-side compressor 10B) and a temperature at the suction side of the compressor (the low-stage-side compressor 10B). In addition, the control device 100 may monitor a degree of overheating at the suction side of the compressor (the low-stage-side compressor 10B) on the basis of a temperature measured by the temperature sensor 32 and a pressure measured by the pressure sensor 33, and perform switching control of the switching valve 14 so that the degree of overheating at the suction side has an appropriate range of temperature. An appropriate degree of overheating at the suction side differs depending on a refrigerant, but the switching control is performed so that a degree of overheating has a range of 0 to 40 degrees in the case of, for example, R1234yf.

In addition, the control device 100 may perform switching control on the switching valve 14 on the basis of, for example, an outlet temperature on the accumulator 20 side of the overheating heat exchanger 15, which is measured by the temperature sensor 34. Specifically, if a temperature measured by the temperature sensor 34 is equal to or higher than a predetermined threshold value corresponding to the non-overheating switching control value, the control device 100 switches the switching valve 14 so that the refrigerant passes through the bypass piping 19. On the other hand, if a temperature measured by the temperature sensor 34 is lower than a predetermined threshold value corresponding to the overheating switching control value, the control device 100 switches the switching valve 14 so that the refrigerant passes through the overheating heat exchanger 15. It takes a little time (for example, several minutes) to notice an effect of switching the switching vale 14 on a temperature at the discharge side of the high-stage-side compressor 10A after the control device 100 switches the switching valve 14. On the other hand, there is an immediate change in the temperature measured by the temperature sensor 34. Accordingly, it is possible to promptly follow a change in temperature of the refrigerant and to perform exact control by performing control based on an outlet temperature on the accumulator 20 side of the overheating heat exchanger 15.

In addition, an example in which a flow rate of the refrigerant passing through the overheating heat exchanger 15 is adjusted by the switching valve 14 is described as an example in the refrigerant circuit described above, but the present invention is not limited thereto. As another example, for example, a two-way valve may be provided on the upstream side of the overheating heat exchanger 15 in the bypass piping 19 or the main piping 18 instead of the switching valve 14, and the control device 100 may adjust a flow rate of the refrigerant passing through the overheating heat exchanger 15 by switching this two-way valve. Moreover, for example, a flow rate adjustment valve may be provided on the upstream side of the overheating heat exchanger 15 in the bypassing piping 19 or the main piping 18, and the control device 100 may adjust a flow rate of the refrigerant passing through the overheating heat exchanger 15 by adjusting a valve opening of this flow rate adjustment valve. For example, if a discharge side temperature measured by the temperature sensor 31 is raised up to near the non-overheating switching control value, the control device 100 controls a valve opening of the flow rate adjustment valve so that a flow rate of the refrigerant passing through the overheating heat exchanger 15 is reduced. In addition, for example, if the discharge side temperature measured by the temperature sensor 31 is lowered up to near the overheating switching control value, the control device 100 controls the valve opening of the flow rate adjustment valve so that the flow rate of the refrigerant passing through the overheating heat exchanger 15 increases. It is possible to control a temperature at the suction side of the low-stage-side compressor 10B in a finer manner by controlling the valve opening of the flow rate adjustment valve.

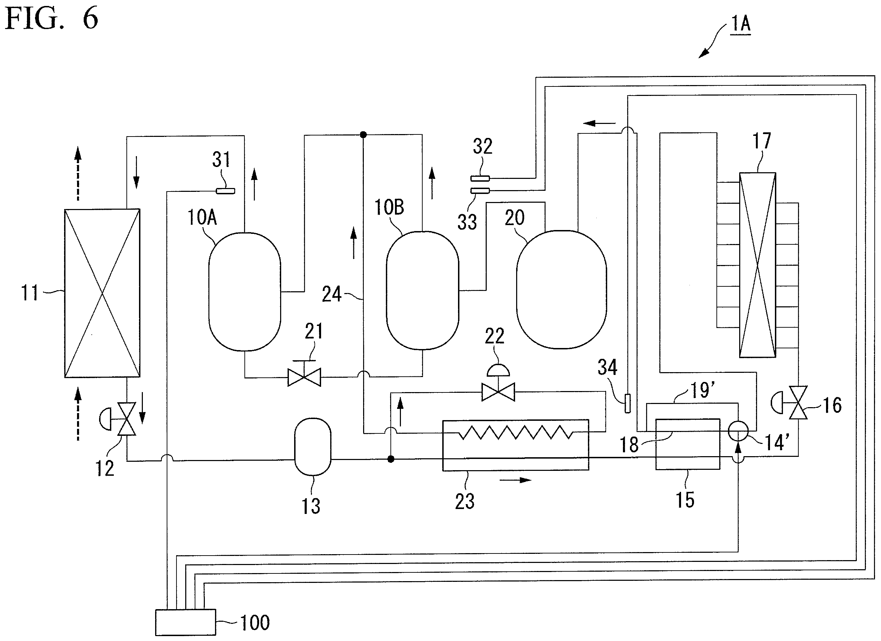

In addition, in the refrigerant circuit described above, an example in which the bypass piping 19 is provided for a refrigerant path flowing into the second expansion valve 16 is described. However, a bypass circuit which bypasses the overheating heat exchanger 15 may be provided on a path side leading to the low-stage-side compressor 10B from the heat-source-side heat exchanger 17. A configuration example of a bypass piping is shown in FIG. 6.

FIG. 6 is a third diagram showing the refrigerant circuit system according to the first embodiment of the present invention.

In a refrigerant circuit system 1A exemplified in FIG. 6, a bypass piping 19' is provided to bypass the overheating heat exchanger 15 as a piping which connects the heat-source-side heat exchanger 17 and the accumulator 20. In addition, the switching valve 14' is provided at an inlet side of the overheating heat exchanger 15 for a refrigerant flowing to the accumulator 20 side from the heat-source-side heat exchanger 17. The control device 100 switches a switching valve 14' so that the refrigerant passes through the bypass piping 19' if a temperature at the discharge side of the high-stage-side compressor 10A is equal to or higher than the non-overheating switching control value. In addition, if the temperature at the discharge side of the high-stage-side compressor 10A is lower than the overheating switching control value, the control device 100 switches the switching valve 14' so that the refrigerant passes through the overheating heat exchanger 15.

### <Second embodiment>

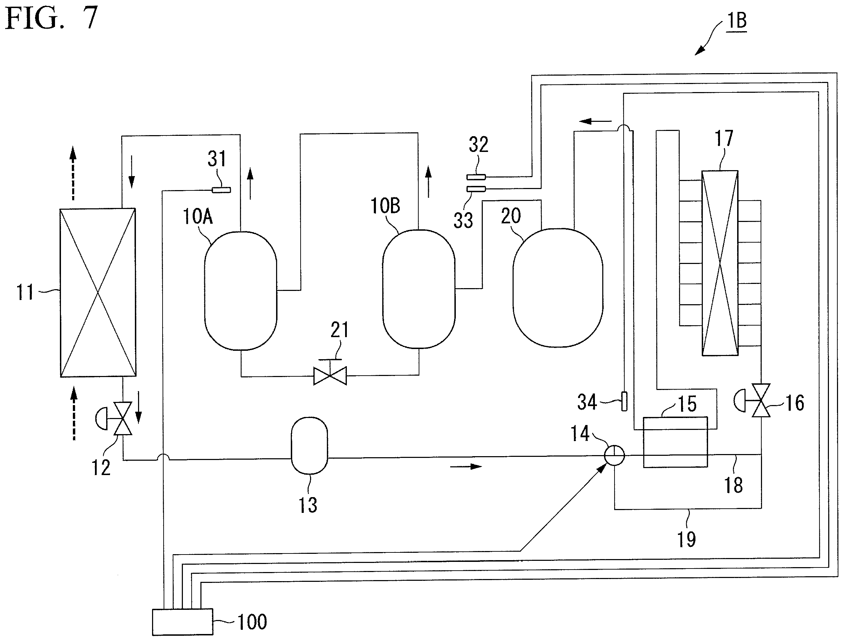

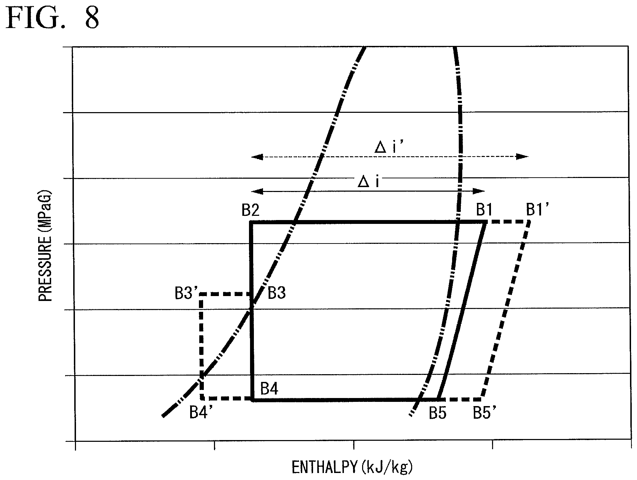

Hereinafter, a refrigerant circuit system according to a second embodiment of the present invention will be described with reference to FIGS. 7 and 8.

A configuration in which a temperature of a refrigerant flowing into a suction side of a compressor is raised by a heat exchanger and a configuration in which a flow rate of a refrigerant passing through the heat exchanger is adjusted, using heat of a refrigerant flowing into an expansion valve provided on an upstream side of an evaporator, can be applied to a refrigerant circuit which does not include a gas injection circuit.

FIG. 7 is a diagram showing a refrigerant circuit system according to the second embodiment of the present invention.

As shown in FIG. 7, a refrigerant circuit system 1B is configured to include the high-stage-side compressor 10A, the low-stage-side compressor 10B, the use-side heat exchanger 11, the first expansion valve 12, the receiver 13, the switching valve 14, the overheating heat exchanger 15, the second expansion valve 16, the heat-source-side heat exchanger 17, the accumulator 20, the main piping 18 which connects these, the bypass piping 19 which bypasses a passage of a refrigerant passing through the overheating heat exchanger 15, the two-way valve 21 which connects the high-stage-side compressor 10A and the low-stage-side compressor 10B, and the control device 100. In addition, the temperature sensor 31, the temperature sensor 32, the pressure sensor 33, and the temperature sensor 34 are provided in the refrigerant circuit system 1B.

Even in the present embodiment, the control device 100 switches the switching valve 14 so that a refrigerant passes through the bypass piping 19 if a temperature at the discharge side of the high-stage-side compressor 10A is equal to or higher than the non-overheating switching control value. In addition, if the temperature at the discharge side of the high-stage-side compressor 10A is lower than the overheating switching control value, the control device 100 switches the switching valve 14 so that a refrigerant passes through the overheating heat exchanger 15. Moreover, operation control of a compressor described in the flowchart of FIG. 5 is performed on the basis of the first limit value, the second limit value, and the like. Accordingly, it is possible to raise a temperature of a refrigerant efficiently even in a heating cycle including a multi-stage compressor without a gas injection circuit. In the same manner as in the first embodiment, even when a low-pressure refrigerant such as R1234yf is used as a refrigerant, a temperature at the discharge side of the high-stage-side compressor 10A can be controlled to be a desired high temperature (for example, 80°C).

FIG. 8 is a P-h diagram of the refrigerant circuit system according to the second embodiment of the present invention.

FIG. 8 is a diagram of a relationship between a pressure and an enthalpy representing a refrigeration cycle of the refrigerant circuit system 1B according to the present embodiment. The signs in FIG. 8 indicate the following states. That is, B1 and B1' indicate states of the refrigerant discharged by the high-stage-side compressor 10A, B2 indicates a state of the refrigerant at the outlet side of the use-side heat exchanger 11, B3 and B3' indicate states of the refrigerant at the inlet side of the second expansion valve 16, B4 and B4' indicate states of the refrigerant at the outlet side of the second expansion valve 16, and B5 and B5' indicate states of the refrigerant at the suction side of the low-stage-side compressor 10B.

Among these, a dotted line graph indicated using B1', B2, B3, B3', B4', and B5' is a P-h diagram when the control device 100 switches the switching valve 14 (overheating circuit) so that heat exchange is performed on the refrigerant. On the other hand, a solid line graph indicated using B1, B2, B3, B4, and B5 is a P-h diagram when the control device 100 switches the switching valve 14 (non-overheating circuit) so that heat exchange is not performed on the refrigerant.

The high-temperature and high-pressure refrigerant (states B1 and B1') discharged from the high-stage-side compressor 10A radiates heat in the use-side heat exchanger 11, is condensed into a liquid, and becomes a high-pressure liquid refrigerant (state B2). The high-pressure liquid refrigerant is depressurized by the first expansion valve 12, becomes an expanded refrigerant, and flows into the receiver 13. The refrigerant (state B3) flowing out from the receiver 13 is cooled by heat exchange at the overheating heat exchanger 15, and leads to the second expansion valve 16 (state B3') in an overheating circuit. The refrigerant is then further depressurized by the second expansion valve 16 (states B4 and B4'), flows into the heat-source-side heat exchanger 17 to evaporate, and becomes a gas refrigerant (states B5 and B5'). The gas refrigerant is compressed by the low-stage-side compressor 10B and the high-stage-side compressor 10A, and has a high temperature and a high pressure (states A1 and A1'). Hereinafter, the same cycle is repeated.

As described above, in the overheating circuit, a refrigerant flowing into the low-stage-side compressor 10B is heated at the overheating heat exchanger 15 by a refrigerant flowing into the second expansion valve 16 (state B5'). With this effect, an enthalpy at the discharge side (state B1') of the high-stage-side compressor 10A increases. On the other hand, the refrigerant flowing into the second expansion valve 16 is cooled by the refrigerant flowing into the suction side of the low-stage-side compressor 10B from the heat-source-side heat exchanger 17 by the heat exchange at the overheating heat exchanger 15 (states B3'and B4').

Δi in FIG. 8 is an enthalpy difference between an inlet (state B1) and an outlet (state B2) of the refrigerant passing through the use-side heat exchanger 11 when the switching valve 14 is switched to the non-overheating circuit. On the other hand, Δi' in FIG. 8 is an enthalpy difference between the inlet (state B1') and the outlet (state B2) of the refrigerant passing through the use-side heat exchanger 11 when the switching valve 14 is switched to the overheating circuit. According to the overheating circuit of the present embodiment, since a temperature at the discharge side of the high-stage-side compressor 10A can be set to a high temperature, even if a low-pressure refrigerant is used, it is possible to obtain a desired use-side set temperature due to the enthalpy difference Δi'.

In the first embodiment and the second embodiment, the number of compressors may also be three stages, four stages, or more instead of two stages.

### <Third embodiment>

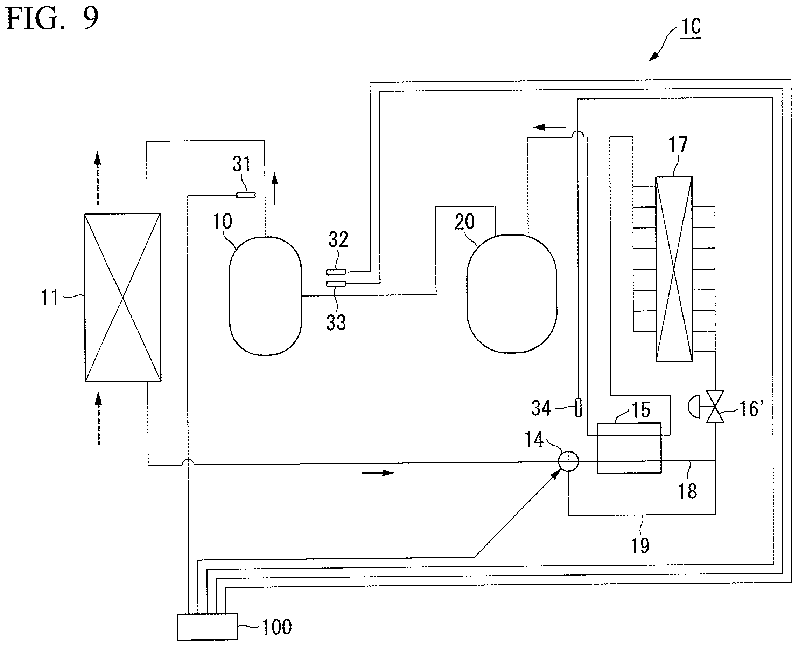

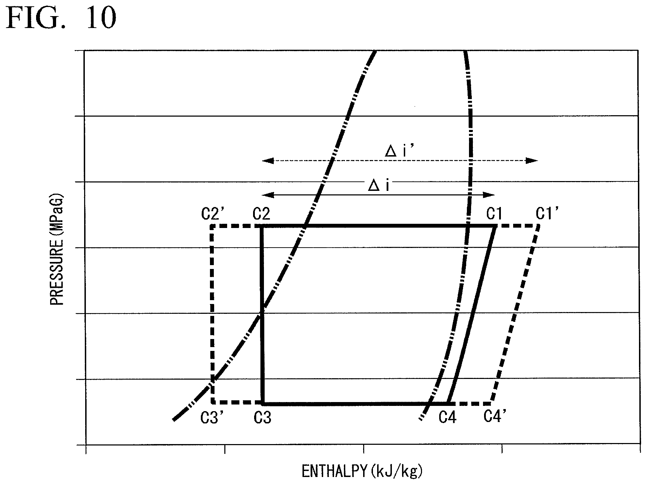

Hereinafter, a refrigerant circuit system according to a third embodiment of the present invention will be described with reference to FIGS. 9 and 10.

By performing heat exchange using heat of the refrigerant flowing into an expansion valve provided on an upstream side of an evaporator, a configuration in which a temperature of a refrigerant flowing into the suction side of a compressor is increased and a configuration in which an amount of heat-exchanged refrigerant is adjusted can be applied to a refrigerant circuit which does not include a multi-stage compressor.

FIG. 9 is a diagram showing a refrigerant circuit system according to the third embodiment of the present invention.

A refrigerant circuit system 1C shown in FIG. 9 is configured to include a compressor 10, a use-side heat exchanger 11, a switching valve 14, an overheating heat exchanger 15, a expansion valve 16', a heat-source-side heat exchanger 17, an accumulator 20, a main piping 18 connecting these, a bypass piping 19 which bypasses a passage of a refrigerant passing through the overheating heat exchanger 15, and a control device 100. In addition, the temperature sensor 31 is provided at the outlet side of the compressor 10, the temperature sensor 32 and the pressure sensor 33 are provided at the suction side of the compressor 10, and the temperature sensor 34 is provided at the outlet side on the accumulator 20 side of the overheating heat exchanger 15 in the refrigerant circuit system 1C.

Even in the present embodiment, the control device 100 switches the switching valve 14 so that a refrigerant passes through the bypass piping 19 if a temperature at the discharge side of the compressor 10 is equal to or higher than the non-overheating switching control value. In addition, if the temperature at the discharge side of the compressor 10 is lower than the overheating switching control value, the control device 100 switches the switching valve 14 so that a refrigerant passes through the overheating heat exchanger 15. Accordingly, even when a low-pressure refrigerant such as R1234yf is used as a refrigerant, a temperature at the discharge side of the compressor 10 can be controlled to be a desired high temperature (for example, 80°C) in a refrigerant circuit of a single stage compressor configuration.

FIG. 10 is a P-h diagram of the refrigerant circuit system according to the third embodiment of the present invention.

FIG. 10 is a diagram of a relationship between a pressure and an enthalpy representing a refrigeration cycle of the refrigerant circuit system 1C according to the present embodiment. The signs in FIG. 10 indicate the following states. That is, C1 and C1' indicate states of the refrigerant discharged by the compressor 10, C2 indicates a state of the refrigerant at the outlet side of the use-side heat exchanger 11, C2 and C2' indicate states of the refrigerant at the inlet side of the expansion valve 16', C3 and C3' indicate states of the refrigerant at the outlet side of the expansion valve 16', and C4 and C4' indicate states of the refrigerant at the suction side of the compressor 10.

Among these, a dotted line graph indicated using C1', C2', C3', and C4' is a P-h diagram when the control device 100 switches the switching valve 14 (overheating circuit) so that heat exchange is performed on the refrigerant. On the other hand, a solid line graph indicated using C1, C2, C3, and C4 is a P-h diagram when the control device 100 switches the switching valve 14 (non-overheating circuit) so that heat exchange is not performed on the refrigerant.

The high-temperature and high-pressure refrigerant (states C1 and C1') discharged from the compressor 10 radiates heat in the use-side heat exchanger 11, is condensed into a liquid, and becomes a high-pressure liquid refrigerant (state C2). A refrigerant flowing into the expansion valve 16' is cooled by heat exchange at the overheating heat exchanger 15 (state C2') in the overheating circuit. The refrigerant is depressurized by the expansion valve 16' (states C3 and C3'), flows into the heat-source-side heat exchanger 17 to evaporate, and becomes a gas refrigerant (state C4). A refrigerant flowing into the compressor 10 is heated at the overheating heat exchanger 15 (state C4') in the overheating circuit. The gas refrigerant is compressed by the low-stage-side compressor 10B and the high-stage-side compressor 10A, and has a high temperature and a high pressure (states C1 and C1'). Hereinafter, the same cycle is repeated.

Δi in FIG. 10 is an enthalpy difference between an inlet (state C1) and an outlet (state C2) of the refrigerant passing through the use-side heat exchanger 11 when the switching valve 14 is switched to the non-overheating circuit. On the other hand, Δi' in FIG. 10 is an enthalpy difference between the inlet (state C1') and the outlet (state C2) of the refrigerant passing through the use-side heat exchanger 11 when the switching valve 14 is switched to the overheating circuit. According to the overheating circuit of the present embodiment, since a temperature at the discharge side of the compressor 10 can be set to a high temperature, even if a low-pressure refrigerant is used, it is possible to obtain a desired use-side set temperature due to the enthalpy difference Δi'.

In addition, constituent elements in the embodiments described above can be appropriately replaced with well-known constituent elements in a scope not departing from the scope of the present invention, which is defined by the claims. Furthermore, the technical scope of the present invention is not limited to the embodiments described above, and various modifications can be made in the scope not departing from the scope of the present invention as defined by the claims. The switching valve 14 is an example of a flow rate adjustment unit. The expansion valve 16' and the second expansion valve 16 are examples of an expansion valve which depressurizes a refrigerant. The bypass piping 19 is an example of a bypass circuit.

### EXPLANATION OF REFERENCES

- 1, 1A, 1B, 1C: Refrigerant circuit system
- 10: Compressor
- 10A: High-stage-side compressor
- 10B: Low-stage-side compressor
- 11: Use-side heat exchanger
- 12: First expansion valve
- 13: Receiver
- 14: Switching valve
- 15: Overheating heat exchanger
- 16: Second expansion valve
- 16': Expansion valve
- 17: Heat-source-side heat exchanger
- 18: Main piping
- 19: Bypass piping
- 20: Accumulator
- 21: Two-way valve
- 22: Third expansion valve
- 23: Intermediate heat exchanger
- 24: Injection piping
- 31, 32, 34: Temperature sensor
- 33: Pressure sensor
- 100: Control device

## Claims

1. A refrigerant circuit system (1, 1A, 1B; 1C), comprising:
a compressor (10A, 10B; 10) configured to compress a refrigerant;
a use-side heat exchanger (11) configured to condense the refrigerant compressed by the compressor (10A, 10B; 10);
an expansion valve (16) configured to depressurize the refrigerant;
a heat-source-side heat exchanger (17) configured to evaporate the refrigerant depressurized by the expansion valve (16);
an overheating heat exchanger (15) configured to perform heat exchange between the refrigerant flowing into the expansion valve (16) and the refrigerant flowing into the compressor (10A, 10B; 10) from the heat-source heat exchanger (17);
a bypass circuit (19) configured to bypass a flow of the refrigerant passing through the overheating heat exchanger (15);
a flow rate adjustment unit (14) configured to adjust a flow rate of the refrigerant passing through the overheating heat exchanger (15);
means (31, 32) for obtaining a temperature related to the compressor (10A, 10B; 10); and
a control device (100) configured to control the flow rate adjustment unit (14),
wherein the control device (100) controls the flow rate adjustment unit (14) so that a flow rate of the refrigerant passing through the overheating heat exchanger (15) decreases if a temperature related to the compressor (10A, 10B; 10) is equal to or higher than a predetermined non-overheating switching control value,
**characterized in that** the control device (100) decreases the number of rotations of the compressor (10A, 10B; 10) if a temperature related to the compressor (10A, 10B; 10) is equal to or higher than a first predetermined limit value higher than the non-overheating switching control value.

2. The refrigerant circuit system (1, 1A, 1B) according to Claim 1,
wherein a plurality of the compressors (10A, 10B) are connected in series,
wherein the refrigerant circuit system (1, 1A, 1B) further comprises a receiver (13) configured to store some of the refrigerant condensed by the use-side heat exchanger (11), and
wherein the expansion valve (16) is configured to depressurize the refrigerant flowing out from the receiver (13).

3. The refrigerant circuit system according to Claim 2, further comprising:
a gas injection circuit (24) configured to branch some of the refrigerant flowing out from the receiver and to supply the branched refrigerant to a suction side of a predetermined compressor (10A) among the plurality of compressors (10A, 10B).

4. The refrigerant circuit system according to any one of Claims 1 to 3,
wherein the bypass circuit (19) is provided as a path which bypasses the overheating heat exchanger (15) among refrigerant paths passing through the overheating heat exchanger (15) from the use-side heat exchanger (11) and leading to the expansion valve (16).

5. The refrigerant circuit system according to any one of Claims 1 to 3,
wherein the bypass circuit (19) is provided as a path which bypasses the overheating heat exchanger (15) among refrigerant paths passing through the overheating heat exchanger (15) from the heat-source-side heat exchanger (17) and leading to the compressor (10A, 10B; 10).

6. The refrigerant circuit system according to any one of Claims 1 to 5,
wherein the control device (100) controls the flow rate adjustment unit (14) so that a flow rate of the refrigerant passing through the overheating heat exchanger (15) increases if a temperature related to the compressor (10A, 10B; 10) is lower than a predetermined overheating switching control value.

7. The refrigerant circuit system according to any one of Claims 1 to 5 further comprising means for obtaining a temperature at an outlet side of the overheating heat exchanger (15), wherein the control device (100) controls the flow rate adjustment unit (14) so that a flow rate of the refrigerant passing through the overheating heat exchanger (15) decreases if a temperature at an outlet side of the overheating heat exchanger (15), instead of a temperature related to the compressor (10A, 10B; 10), is equal to or higher than a predetermined threshold value.

8. The refrigerant circuit system according to Claim 6 further comprising means for obtaining a temperature at an outlet side of the overheating heat exchanger (15), wherein the control device (100) controls the flow rate adjustment unit (14) so that a flow rate of the refrigerant passing through the overheating heat exchanger (15) increases if a temperature at the outlet side of the overheating heat exchanger (15) instead of a temperature related to the compressor (10A, 10B; 10) is lower than a predetermined threshold value.

9. The refrigerant circuit system according to any one of Claims 5 to 8,
wherein the control device (100) controls the flow rate adjustment unit (14) so that a degree of overheating at a suction side of the compressor (10A, 10B; 10) is within a predetermined range.

10. The refrigerant circuit system according to any one of Claims 5 to 9,
wherein the control device (100) stops the compressor (10A, 10B; 10) if a temperature related to the compressor (10A, 10B; 10) is equal to or higher than a second predetermined limit value higher than the first limit value.

11. A control method for controlling a refrigerant circuit system (1, 1A, 1B; 1C) including a compressor (10A, 10B; 10) configured to compress a refrigerant, a use-side heat exchanger (11) configured to condense the refrigerant compressed by the compressor (10A, 10B; 10), an expansion valve (16) configured to depressurize the refrigerant, a heat-source-side heat exchanger (17) configured to evaporate the refrigerant, an overheating heat exchanger (15) configured to perform heat exchange between the refrigerant flowing into the expansion valve (16) and the refrigerant flowing into the compressor (10A, 10B; 10) from the heat-source-side heat exchanger (17), a bypass (19) circuit configured to bypass a flow of the refrigerant passing through the overheating heat exchanger (15), and a flow rate adjustment unit (14) configured to adjust a flow rate of the refrigerant passing through the overheating heat exchanger (15), the control method comprising:
controlling the flow rate adjustment unit (14) so that a flow rate of the refrigerant passing through the overheating heat exchanger (15) decreases if a temperature related to the compressor (10A, 10B; 10) is equal to or higher than a predetermined non-overheating switching control value,
the method being **characterized by** comprising decreasing the number of rotations of the compressor (10A, 10B; 10) if a temperature related to the compressor (10A, 10B; 10) is equal to or higher than a first predetermined limit value higher than the non-overheating switching control value.

## Patentansprüche

1. Kältemittelkreissystem (1, 1A, 1B; 1C), das Folgendes umfasst:
einen Verdichter (10A, 10B; 10), der dazu ausgelegt ist, ein Kältemittel zu verdichten;
einen verwendungsseitigen Wärmetauscher (11), der dazu ausgelegt ist, das Kältemittel, das vom Verdichter (10A, 10B; 10) verdichtet wird, zu verflüssigen;
ein Expansionsventil (16), das dazu ausgelegt ist, das Kältemittel drucklos zu machen;
einen wärmequellenseitigen Wärmetauscher (17), der dazu ausgelegt ist, das Kältemittel, das vom Expansionsventil (16) drucklos gemacht wird, zu verdampfen;
einen Überhitzungswärmetauscher (15), der dazu ausgelegt ist, zwischen dem Kältemittel, das in das Expansionsventil (16) fließt, und dem Kältemittel, das vom wärmequellenseitigen Wärmetauscher (17) in den Verdichter (10A, 10B; 10) fließt, einen Wärmeaustausch durchzuführen;
einen Umleitungskreis (19), der dazu ausgelegt ist, einen Fluss des Kältemittels, das durch den Überhitzungswärmetauscher (15) geleitet wird, umzuleiten;
eine Durchflussratenanpassungseinheit (14), die dazu ausgelegt ist, eine Durchflussrate des Kältemittels, das durch den Überhitzungswärmetauscher (15) geleitet wird, anzupassen;
Mittel (31, 32) zum Erhalten einer auf den Verdichter (10A, 10B; 10) bezogenen Temperatur und
eine Steuervorrichtung (100), die dazu ausgelegt ist, die Durchflussratenanpassungseinheit (14) zu steuern,
wobei die Steuervorrichtung (100) die Durchflussratenanpassungseinheit (14) derart steuert, dass eine Durchflussrate des Kältemittels, das durch den Überhitzungswärmetauscher (15) geleitet wird, verringert wird, wenn eine Temperatur, die auf den Verdichter (10A, 10B; 10) bezogen ist, gleich oder höher als ein vorbestimmter Umschaltsteuerwert bei Nichtüberhitzung ist,
**dadurch gekennzeichnet, dass** die Steuervorrichtung (100) die Anzahl von Drehungen des Verdichters (10A, 10B; 10) verringert, wenn eine Temperatur, die auf den Verdichter (10A, 10B; 10) bezogen ist, gleich oder höher ist als ein erster vorbestimmter Grenzwert, der höher ist als der Umschaltsteuerwert bei Nichtüberhitzung.

2. Kältemittelkreissystem (1, 1A, 1B) nach Anspruch 1,
wobei eine Vielzahl der Verdichter (10A, 10B) in Reihe verbunden sind,
wobei das Kältemittelkreissystem (1, 1A, 1B) ferner einen Sammler (13) umfasst, der dazu ausgelegt ist, etwas des Kältemittels, das vom verwendungsseitigen Wärmetauscher (11) verflüssigt wird, aufzunehmen, und
wobei das Expansionsventil (16), dazu ausgelegt ist, das Kältemittel, das aus dem Sammler (13) fließt, drucklos zu machen.

3. Kältemittelkreissystem nach Anspruch 2, das ferner Folgendes umfasst:
einen Gasinjektionskreis (24), der dazu ausgelegt ist, etwas von dem Kältemittel, das aus dem Sammler fließt, abzuzweigen und das abgezweigte Kältemittel einer Ansaugseite eines vorbestimmten Verdichters (10A) unter der Vielzahl von Verdichtern (10A, 10B) zuzuführen.

4. Kältemittelkreissystem nach einem der Ansprüche 1 bis 3,
wobei der Umleitungskreis (19) als ein Pfad, der um den Überhitzungswärmetauscher (15) geleitet wird, unter Kältemittelpfaden, die vom verwendungsseitigen Wärmetauscher (11) durch den Überhitzungswärmetauscher (15) geleitet werden und zum Expansionsventil (16) führen, bereitgestellt ist.

5. Kältemittelkreissystem nach einem der Ansprüche 1 bis 3,
wobei der Umleitungskreis (19) als ein Pfad, der um den Überhitzungswärmetauscher (15) geleitet wird, unter Kältemittelpfaden, die vom wärmequellenseitigen Wärmetauscher (17) durch den Überhitzungswärmetauscher (15) geleitet werden und zum Verdichter (10A, 10B; 10) führen, bereitgestellt ist.

6. Kältemittelkreissystem nach einem der Ansprüche 1 bis 5,
wobei die Steuervorrichtung (100) die Durchflussratenanpassungseinheit (14) derart steuert, dass eine Durchflussrate des Kältemittels, das durch den Überhitzungswärmetauscher (15) geleitet wird, erhöht wird, wenn eine Temperatur, die auf den Verdichter (10A, 10B; 10) bezogen ist, niedriger als ein vorbestimmter Umschaltsteuerwert bei Überhitzung ist.

7. Kältemittelkreissystem nach einem der Ansprüche 1 bis 5, das ferner Mittel zum Erhalten einer Temperatur auf einer Auslassseite des Überhitzungswärmetauschers (15) umfasst,
wobei die Steuervorrichtung (100) die Durchflussratenanpassungseinheit (14) derart steuert, dass eine Durchflussrate des Kältemittels, das durch den Überhitzungswärmetauscher (15) geleitet wird, verringert wird, wenn eine Temperatur auf einer Auslassseite des Überhitzungswärmetauschers (15) anstelle einer Temperatur, die auf den Verdichter (10A, 10B; 10) bezogen ist, gleich oder höher als ein vorbestimmter Schwellwert ist.

8. Kältemittelkreissystem nach Anspruch 6, das ferner Mittel zum Erhalten einer Temperatur auf einer Auslassseite des Überhitzungswärmetauschers (15) umfasst,
wobei die Steuervorrichtung (100) die Durchflussratenanpassungseinheit (14) derart steuert, dass eine Durchflussrate des Kältemittels, das durch den Überhitzungswärmetauscher (15) geleitet wird, erhöht wird, wenn eine Temperatur auf der Auslassseite des Überhitzungswärmetauschers (15) anstelle einer Temperatur, die auf den Verdichter (10A, 10B; 10) bezogen ist, niedriger als ein vorbestimmter Schwellwert ist.

9. Kältemittelkreissystem nach einem der Ansprüche 5 bis 8,
wobei die Steuervorrichtung (100) die Durchflussratenanpassungseinheit (14) derart steuert, dass ein Grad der Überhitzung auf einer Ansaugseite des Verdichters (10A, 10B; 10) innerhalb eines vorbestimmten Bereichs liegt.

10. Kältemittelkreissystem nach einem der Ansprüche 5 bis 9,
wobei die Steuervorrichtung (100) den Verdichter (10A, 10B; 10) stoppt, wenn eine Temperatur, die auf den Verdichter (10A, 10B; 10) bezogen ist, gleich oder höher ist als ein zweiter vorbestimmter Grenzwert, der höher ist als der erste Grenzwert.

11. Steuerverfahren zum Steuern eines Kältemittelkreissystems (1, 1A, 1B; 1C), das einen Verdichter (10A, 10B; 10), der dazu ausgelegt ist, ein Kältemittel zu verdichten, einen verwendungsseitigen Wärmetauscher (11), der dazu ausgelegt ist, das Kältemittel, das vom Verdichter (10A, 10B; 10) verdichtet wird, zu verflüssigen, ein Expansionsventil (16), das dazu ausgelegt ist, das Kältemittel drucklos zu machen, einen wärmequellenseitigen Wärmetauscher (17), der dazu ausgelegt ist, das Kältemittel zu verdampfen, einen Überhitzungswärmetauscher (15), der dazu ausgelegt ist, zwischen dem Kältemittel, das in das Expansionsventil (16) fließt, und dem Kältemittel, das vom wärmequellenseitigen Wärmetauscher (17) in den Verdichter (10A, 10B; 10) fließt, einen Wärmeaustausch durchzuführen, einen Umleitungs(19)-Kreis, der dazu ausgelegt ist, einen Fluss des Kältemittels, das durch den Überhitzungswärmetauscher (15) geleitet wird, umzuleiten, und eine Durchflussratenanpassungseinheit (14), die dazu ausgelegt ist, eine Durchflussrate des Kältemittels, das durch den Überhitzungswärmetauscher (15) geleitet wird, anzupassen, beinhaltet, wobei das Steuerverfahren Folgendes umfasst:
Steuern der Durchflussratenanpassungseinheit (14) derart, dass eine Durchflussrate des Kältemittels, das durch den Überhitzungswärmetauscher (15) geleitet wird, verringert wird, wenn eine Temperatur, die auf den Verdichter (10A, 10B; 10) bezogen ist, gleich oder höher als ein vorbestimmter Umschaltsteuerwert bei Nichtüberhitzung ist,
wobei das Verfahren **dadurch gekennzeichnet ist, dass** es das Verringern der Anzahl von Drehungen des Verdichters (10A, 10B; 10) umfasst, wenn eine Temperatur, die auf den Verdichter (10A, 10B; 10) bezogen ist, gleich oder höher ist als ein erster vorbestimmter Grenzwert, der höher ist als der Umschaltsteuerwert bei Nichtüberhitzung.

## Revendications

1. Système de circuit de fluide frigorigène (1, 1A, 1B ; 1C), comprenant :
un compresseur (10A, 10B ; 10) configuré pour comprimer un fluide frigorigène ;
un échangeur de chaleur côté utilisation (11) configuré pour condenser le fluide frigorigène comprimé par le compresseur (10A, 10B ; 10) ;
un détendeur (16) configuré pour dépressuriser le fluide frigorigène ;
un échangeur de chaleur côté source de chaleur (17) configuré pour faire évaporer le fluide frigorigène dépressurisé par le détendeur (16) ;
un échangeur de chaleur à surchauffe (15) configuré pour réaliser un échange de chaleur entre le fluide frigorigène circulant dans le détendeur (16) et le fluide frigorigène circulant dans le compresseur (10A, 10B ; 10) à partir de l'échangeur de chaleur de source de chaleur (17) ;
un circuit de dérivation (19) configuré pour dériver un écoulement du fluide frigorigène traversant l'échangeur de chaleur à surchauffe (15) ;
une unité de réglage de débit (14) configurée pour régler un débit du fluide frigorigène traversant l'échangeur de chaleur à surchauffe (15) ;
des moyens (31, 32) pour obtenir une température relative au compresseur (10A, 10B ; 10) ; et
un dispositif de commande (100) configuré pour commander l'unité de réglage de débit (14),
dans lequel le dispositif de commande (100) commande l'unité de réglage de débit (14) de sorte qu'un débit du fluide frigorigène traversant l'échangeur de chaleur à surchauffe (15) diminue si une température relative au compresseur (10A, 10B ; 10) est égale ou supérieure à une valeur de commande de commutation de non-surchauffe prédéterminée,
**caractérisé en ce que** le dispositif de commande (100) diminue le nombre de rotations du compresseur (10A, 10B ; 10) si une température relative au compresseur (10A, 10B ; 10) est égale ou supérieure à une première valeur limite prédéterminée supérieure à la valeur de commande de commutation de non-surchauffe.

2. Système de circuit de fluide frigorigène (1, 1A, 1B) selon la revendication 1,
dans lequel une pluralité des compresseurs (10A, 10B) sont reliés en série,
dans lequel le système de circuit de fluide frigorigène (1, 1A, 1B) comprend en outre un récepteur (13) configuré pour stocker une partie du fluide frigorigène condensé par l'échangeur de chaleur côté utilisation (11), et
dans lequel le détendeur (16) est configuré pour dépressuriser le fluide frigorigène sortant du récepteur (13).

3. Système de circuit de fluide frigorigène selon la revendication 2, comprenant en outre :
un circuit d'injection de gaz (24) configuré pour prélever une partie du fluide frigorigène sortant du récepteur et pour fournir le fluide frigorigène prélevé à un côté d'aspiration d'un compresseur prédéterminé (10A) parmi la pluralité de compresseurs (10A, 10B).

4. Système de circuit de fluide frigorigène selon l'une quelconque des revendications 1 à 3,
dans lequel le circuit de dérivation (19) est fourni sous la forme d'une voie qui contourne l'échangeur thermique à surchauffe (15) parmi des voies de fluide frigorigène traversant l'échangeur thermique à surchauffe (15) à partir de l'échangeur de chaleur côté utilisation (11) et menant au détendeur (16).

5. Système de circuit de fluide frigorigène selon l'une quelconque des revendications 1 à 3,
dans lequel le circuit de dérivation (19) est fourni sous la forme d'une voie qui contourne l'échangeur thermique à surchauffe (15) parmi des voies de fluide frigorigène traversant l'échangeur thermique à surchauffe (15) à partir de l'échangeur de chaleur côté source de chaleur (17) et menant au compresseur (10A, 10B ; 10).

6. Système de circuit de fluide frigorigène selon l'une quelconque des revendications 1 à 5,
dans lequel le dispositif de commande (100) commande l'unité de réglage de débit (14) de sorte qu'un débit du fluide frigorigène traversant l'échangeur de chaleur à surchauffe (15) augmente si une température relative au compresseur (10A, 10B ; 10) est inférieure à une valeur de commande de commutation de surchauffe prédéterminée.

7. Système de circuit de fluide frigorigène selon l'une quelconque des revendications 1 à 5, comprenant en outre des moyens pour obtenir une température au niveau d'un côté de sortie de l'échangeur de chaleur à surchauffe (15),
dans lequel le dispositif de commande (100) commande l'unité de réglage de débit (14) de sorte qu'un débit du fluide frigorigène traversant l'échangeur de chaleur à surchauffe (15) diminue si une température sur un côté de sortie de l'échangeur de chaleur à surchauffe (15), au lieu d'une température relative au compresseur (10A, 10B ; 10), est égale ou supérieure à une valeur seuil prédéterminée.

8. Système de circuit de fluide frigorigène selon la revendication 6, comprenant en outre des moyens pour obtenir une température au niveau d'un côté de sortie de l'échangeur de chaleur à surchauffe (15),
dans lequel le dispositif de commande (100) commande l'unité de réglage de débit (14) de sorte qu'un débit du fluide frigorigène traversant l'échangeur de chaleur à surchauffe (15) augmente si une température sur le côté de sortie de l'échangeur de chaleur à surchauffe (15) au lieu d'une température relative au compresseur (10A, 10B ; 10) est inférieure à une valeur seuil prédéterminée.

9. Système de circuit de fluide frigorigène selon l'une quelconque des revendications 5 à 8,
dans lequel le dispositif de commande (100) commande l'unité de réglage de débit (14) de sorte qu'un degré de surchauffe sur un côté d'aspiration du compresseur (10A, 10B ; 10) est à l'intérieur d'une plage prédéterminée.

10. Système de circuit de fluide frigorigène selon l'une quelconque des revendications 5 à 9,
dans lequel le dispositif de commande (100) arrête le compresseur (10A, 10B ; 10) si une température relative au compresseur (10A, 10B ; 10) est égale ou supérieure à une seconde valeur limite prédéterminée supérieure à la première valeur limite.

11. Procédé de commande pour commander un système de circuit de fluide frigorigène (1, 1A, 1B ; 1C) incluant un compresseur (10A, 10B ; 10) configuré pour comprimer un fluide frigorigène, un échangeur de chaleur côté utilisation (11) configuré pour condenser le fluide frigorigène comprimé par le compresseur (10A, 10B ; 10), un détendeur (16) configuré pour dépressuriser le fluide frigorigène, un échangeur de chaleur côté source de chaleur (17) configuré pour faire évaporer le fluide frigorigène, un échangeur de chaleur à surchauffe (15) configuré pour réaliser un échange de chaleur entre le fluide frigorigène circulant dans le détendeur (16) et le fluide frigorigène circulant dans le compresseur (10A, 10B ; 10) à partir de l'échangeur de chaleur de source de chaleur (17), un circuit de dérivation (19) configuré pour dériver un écoulement du fluide frigorigène traversant l'échangeur de chaleur à surchauffe (15), et une unité de réglage de débit (14) configurée pour régler un débit du fluide frigorigène traversant l'échangeur de chaleur à surchauffe (15), le procédé de commande comprenant le fait de :
commander l'unité de réglage de débit (14) de sorte qu'un débit du fluide frigorigène traversant l'échangeur de chaleur à surchauffe (15) diminue si une température relative au compresseur (10A, 10B ; 10) est égale ou supérieure à une valeur de commande de commutation de non-surchauffe prédéterminée,
le procédé étant **caractérisé en ce qu'**il comprend le fait de diminuer le nombre de rotations du compresseur (10A, 10B ; 10) si une température relative au compresseur (10A, 10B ; 10) est égale ou supérieure à une première valeur limite prédéterminée supérieure à la valeur de commande de commutation de non-surchauffe.
